# EUROPEAN PATENT APPLICATION

(11) **EP 4 488 107 A1**
(43) Date of publication of application: **08.01.2025**
(21) Application number: 23184267.5
(22) Date of filing: 07.07.2023
(51) Int. Cl.: B60L 53/16, B60L 58/13

(54) **SYSTEM AND METHOD FOR HANDLING A REQEUST TO UNLOCK A CHARGE INLET OF A VEHICLE**

(71) Applicant: VOLVO TRUCK CORPORATION, 405 08 Göteborg (SE)
(72) Inventor: SYLVÈN, Martin, 436 39 Askim (SE)
(74) Representative: Valea AB

(57) **Abstract**

The present disclosure relates to a computer system (105, 400) for handling a request to unlock a charge inlet (108) of a vehicle (100), wherein the computer system (105, 400) comprises processing circuitry (402) configured to:
- obtain a request to unlock the charge inlet (108);
- when the request has been received, compare a current condition of the vehicle (100) with a target condition of the vehicle (100), wherein the current condition comprises a current position of the vehicle (100) and the target condition comprises a target position of the vehicle (100);
- determine to grant the request to unlock the charge inlet (108) when a result of the comparing indicates that the target condition is met; and to
- trigger unlocking of the charge inlet (108) when the request has been granted.

## Description

### TECHNICAL FIELD

The disclosure relates generally to a computer system, a vehicle, computer-implemented method, a computer program product and non-transitory computer-readable storage medium. In particular aspects, the disclosure relates to handling a request to unlock a charge inlet of a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

For an at least partly electrically driven vehicle, the charge cord is locked to the vehicle during charging to avoid that charge cord is ejected and someone can get hurt and damage physical equipment during charging. It is also necessary to keep the charge cord locked to the charge inlet to avoid a person that is not authorized to remove the charge cord. If the charging cord is removed by an unauthorized person, the charging may be stopped before the vehicle is charged to the required State of Charge (SOC), and this may impact the vehicle's mission since it does not have the necessary SOC.

Today, it may be cumbersome for a user to remove the charge cord from the charge inlet of a vehicle since user must first press an unlock button on an authentication device, e.g. a key-fob, for a long time to get authorized. Secondly, the user may press a stop button next to the charge inlet on the vehicle. After that, the charging of the vehicle will stop, and the charge cord is unlocked and may be removed. Note that not all vehicles comprise a stop button next to the charge inlet, but comprise other means for stopping an ongoing charging session.

If the user does not have an authentication device for the vehicle, it is not possible to authorize unlocking of the charge cord. This may be the case for example if the charging fails and someone needs to remove the charge cord and insert it again. The physical authentication device or access to a vehicle computer application is necessary where it is possible to remotely authorize unlock. This authorization process is a manual process which takes time to perform.

In view of the above, there is a strive to develop further improved technology relating to authorization to access a charge inlet of a vehicle.

### SUMMARY

According to a first aspect of the disclosure, a computer system for handling a request to unlock a charge inlet of a vehicle is provided. The computer system comprises processing circuitry configured to:
- obtain a request to unlock the charge inlet;
- when the request has been received, compare a current condition of the vehicle with a target condition of the vehicle, wherein the current condition comprises a current position of the vehicle and the target condition comprises a target position of the vehicle;
- determine to grant the request to unlock the charge inlet when a result of the comparing indicates that the target condition is met; and to
- trigger unlocking of the charge inlet when the request has been granted.

The first aspect of the disclosure may seek to improve handling of a request to unlock a charge inlet. A technical benefit may include that handling of a request to unlock a charge inlet is improved. For example, when the vehicle is parked at a specific area in which the current condition is included, then this may be a sufficient condition for granting the request to unlock the charge inlet. The specific area may be, for example a parking area which may be the home area of the vehicle which its owner has control over. In such area where the owner has control, it may be desirable for the owner or other personnel to be able to obtain authorization to unlock the charge inlet without further authorization. Thus, it is a convenient and easy way of unlocking the charge inlet.

Optionally in some examples, including in at least one preferred example, the current condition may further comprise a current State of Charge (SOC) of the vehicle and the target condition may further comprise a target SOC of the vehicle; and/or the current condition further comprises a current time and the target condition further comprises a target time; and/or the current condition further comprises a current charging status and the target condition further comprises a target charging status; and/or the current condition further comprises a current remaining range and the target condition further comprises a target remaining range.

A technical benefit may include that it may be ensured that the vehicle will be charged to the target SOC before the charge inlet is unlocked and the charge cord may be removed from the charge inlet. It may not be possible to obtain a grant to unlock the charge inlet before the target SOC is met. When the target SOC is met, the vehicle will have sufficient level of SOC in order for its mission to be fulfilled. When the condition is related to a time, the charge inlet may only be unlocked when the current time matches the target time. For example, it may be desirable to only allow unlocking of the chare inlet at a certain time, e.g. during working hours. Requests that are received outside of the target time may not be granted. When the condition is related to charging status, it may be possible to grant access to unlock the charge inlet for example if an error in the charging has occurred. When an error in the charging has occurred, it may be necessary to remove the charge cord from the charge inlet in order to correct the error. When the condition is related to range, it may be possible to grant access to unlock the charge inlet when a remaining range of the vehicle matches the target remaining range, i.e. an estimated range for a current mission of the vehicle.

Optionally in some examples, including in at least one preferred example, the processing circuitry may be further configured to determine to deny the request to unlock the charge inlet when a result of the comparing indicates that the target condition is not met.

A technical benefit may include that it may reduce the risk for unwanted unlocking of the charge inlet when the vehicle is located at a current position which does not correspond to the target position.

Optionally in some examples, including in at least one preferred example, the processing circuitry may be further configured to provide information indicating the denial of the request to a User Equipment (UE).

The UE may for example be used by a driver, a vehicle owner etc. A technical benefit may include that, with information about the denial, it may be possible to make changes such that the request may be granted if the request is sent a second time. The information about the denial may increase the understanding of why the grant has been denied.

Optionally in some examples, including in at least one preferred example, the request to unlock the charge inlet may be obtained from a charging stop button of the vehicle.

A technical benefit may include that the charging stop button is an already existing button in the vehicle, and it is not necessary to add a specific and standalone button for the purpose of the request. It may be easy to add the request to unlock functionality to the charging stop button.

Optionally in some examples, including in at least one preferred example, the processing circuitry may be further configured to obtain information indicating the target condition.

A technical benefit may include that the computer system does not have to determine the target condition itself, which reduces the time between obtaining the request and taking the decision to grant or deny the request.

Optionally in some examples, including in at least one preferred example, the processing circuitry may be further configured to provide an acknowledgement of that the information indicating the target condition has been obtained.

A technical benefit may include that the provider of the target condition may be ensured that the target condition has been obtained, and it is not necessary to re-send it to the computer system.

Optionally in some examples, including in at least one preferred example, the vehicle may be at least partly electrically driven or at least partly fuel cell driven.

A technical benefit may include that handling of a request to unlock a charge inlet is improved for such type of vehicle.

According to a second aspect of the disclosure, a vehicle is provided. The vehicle comprises the computer system of the first aspect and a charge inlet.

Technical benefits of the second aspect of the disclosure are largely analogous to the technical benefits of the first aspect of the disclosure. It shall also be noted that all examples of the first aspect of the disclosure are applicable to and combinable with all examples of the second aspect of the disclosure, and vice versa.

According to a third aspect of the disclosure, a computer-implemented method is provided. the method comprises:
- obtaining, by a processing circuitry f a computer system, a request to unlock the charge inlet;
- when the request has been received, comparing, by the processing circuitry, a current condition of the vehicle with a target condition of the vehicle, wherein the current condition comprises a current position of the vehicle and the target condition comprises a target position of the vehicle;

- determining, by the processing circuitry, to grant the request to unlock the charge inlet when the result of the comparing indicates that the target condition is met; and
- triggering, by the processing circuitry, unlocking of the charge inlet when the request has been granted.

Technical benefits of the third aspect of the disclosure are largely analogous to the technical benefits of the first aspect and the second aspect of the disclosure. It shall also be noted that all examples of the first aspect and the second aspect of the disclosure are applicable to and combinable with all examples of the third aspect of the disclosure, and vice versa.

Optionally in some examples, including in at least one preferred example, the current condition may further comprise a current SOC of the vehicle and the target condition may further comprise a target SOC of the vehicle; and/or wherein the current condition further comprises a current time and the target condition further comprises a target time; and/or wherein the current condition further comprises a current charging status and the target condition further comprises a target charging status; and/or wherein the current condition further comprises a current remaining range and the target condition further comprises a target remaining range.

Optionally in some examples, including in at least one preferred example, the method may further comprise:
- determining, by the processing circuitry, to deny the request to unlock the charge inlet when a result of the comparing indicates that the target condition is not met.

Optionally in some examples, including in at least one preferred example, the method may further comprise:
- providing, by the processing circuitry, a confirmation of the unlocked charge inlet to a UE.

Optionally in some examples, including in at least one preferred example, the method may further comprise:
- providing information indicating the denial of the request to a user interface.

Optionally in some examples, including in at least one preferred example, the request to unlock the charge inlet is obtained from a charging stop button of the vehicle.

Optionally in some examples, including in at least one preferred example, the request to unlock the charge inlet may be obtained from a charging stop button of the vehicle.

Optionally in some examples, including in at least one preferred example, the method may further comprise:
- obtaining, by the processing circuitry, information indicating the target condition.

Optionally in some examples, including in at least one preferred example, the method may further comprise:
- providing, by the processing circuitry, an acknowledgement of that the information indicating the target condition has been obtained.

According to a fourth aspect of the disclosure, a computer program product is provided. The computer program product comprises program code for performing, when executed by a processing circuitry, the method of the third aspect.

Technical benefits of the fourth aspect of the disclosure are largely analogous to the technical benefits of the first aspect, the second aspect and the third aspect of the disclosure. It shall also be noted that all examples of the first aspect, the second aspect and the third aspect of the disclosure are applicable to and combinable with all examples of the fourth aspect of the disclosure, and vice versa.

According to a fifth aspect of the disclosure, a non-transitory computer-readable storage medium is provided. The non-transitory computer-readable storage medium comprises instructions, which when executed by a processing circuitry, cause the processing circuitry to perform the method of the third aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary drawing illustrating a vehicle according to an example.
**FIG. 2** is an exemplary signaling diagram illustrating a method according to an example.
**FIG. 3** is an exemplary flow chart illustrating a method according to an example.
**FIG. 4** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

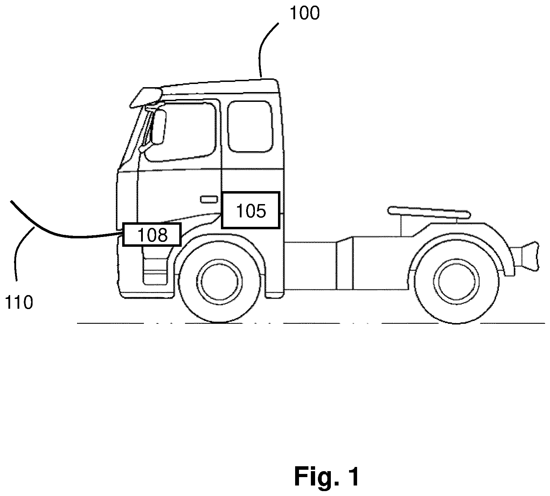

**FIG. 1** is an exemplary drawing illustrating a vehicle **100** according to an example. The vehicle **100** may be a heavy-duty vehicle, such as truck, bus, marine vessel or construction equipment, among other vehicle types. Although the disclosure may be described with respect to a particular vehicle, the disclosure is not restricted to any particular vehicle.

The vehicle **100** comprises a chargeable energy source used to drive the vehicle **100.** The vehicle **100** may be at least partly electrically driven, for example by means of a battery, a fuel cell or any other suitable chargeable energy source.

The vehicle **100** comprises a charge inlet **108** arranged to receive a charge cord **110.** In other words, the charge cord **110** is arranged to be connected to the charge inlet **108** when the vehicle **100** is to be charged. The charge inlet **108** may be referred to as a charge cord inlet, a charge connector, a charge cord connector etc. The charge cord **110** may be referred to as a charge cable.

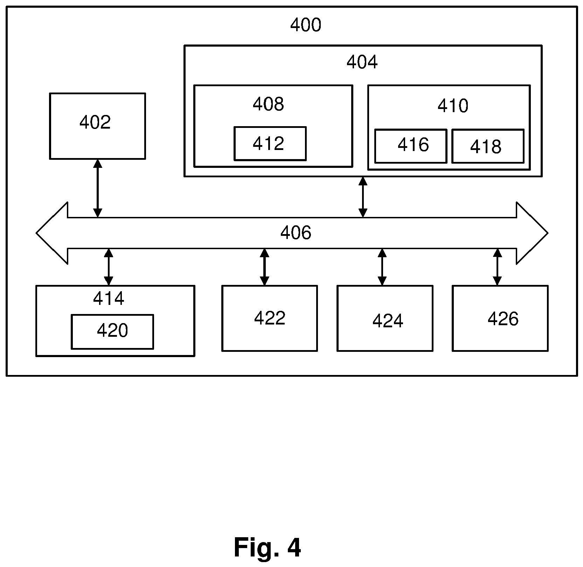

The vehicle **100** comprises a computer system **105, 400.** The second computer system **105, 400** comprises a processing circuitry **402.** The reference numbers 400 and 402 are shown in **FIG. 4****, which** will be described in detail later.

The vehicle **100** may or may not be comprised in a vehicle fleet. The vehicle fleet comprises multiple vehicles **100.** The vehicles comprised in the vehicle fleet may be at least partly controlled by a fleet manager system, and the fleet manager system may be an autonomous system, or it may be at least partly manually operated by a fleet manager.

In this disclosure, a fleet manager, driver or any other user may set conditions to automatically authorize unlock of the charge inlet **108.** In other words, when a condition is met, there is no need for a manual authorization to unlock the charge inlet **108** using key-fob or computer application on a UE. With this disclosure, it may only be necessary to press the charge stop button and charge inlet **108** is unlocked and the charge cord **110** may be removed. The charge stop button is only an example, and any other suitable unlocking means may be used for unlocking the charge inlet **108.**

The conditions may be managed in a fleet management system or computer application used by, for example the driver. These conditions may be:
- Charge target condition: When actual SOC >= target SOC. The target SOC may be a dynamic SOC depending on the SOC needs for the vehicle's mission.
- Geographical condition: When the vehicle **100** is parked in a specific area, no further authorization is needed. Anyone can press the stop button to unlock the charge inlet **108** when the geographical condition is fulfilled.
- Time: When a request to unlock the charge inlet **108** may be granted at certain times, e.g. during working hours.
- Charging status: When the request to unlock the charge inlet **108** may be granted when the charging status indicates e.g. that a charging error has occurred.
- Range: When the request to unlock the charging let **108** may be granted when a remaining range of the vehicle matches the target remaining range, i.e. an estimated range for a current mission of the vehicle.

When the computer system **103,** 400 has granted the request for authorization to unlock the charging inlet **108,** information about the grant and the associated requester **105** may be stored in any suitable storage medium, e.g. a local memory in the computer system **103, 400,** a cloud memory accessible by the computer system **103, 400,** just to mention some examples. When the information about the grant and the associated requester **105** is stored, it is possible to track who has been granted authorization. For example, if the charging cable is not connected to the charging inlet **108** as it should be, the stored information may be used to track which requester **105** that was latest authorized to access the charging inlet **108,** and this requester **105** may be contacted in order to request information about the not connected charging cable.

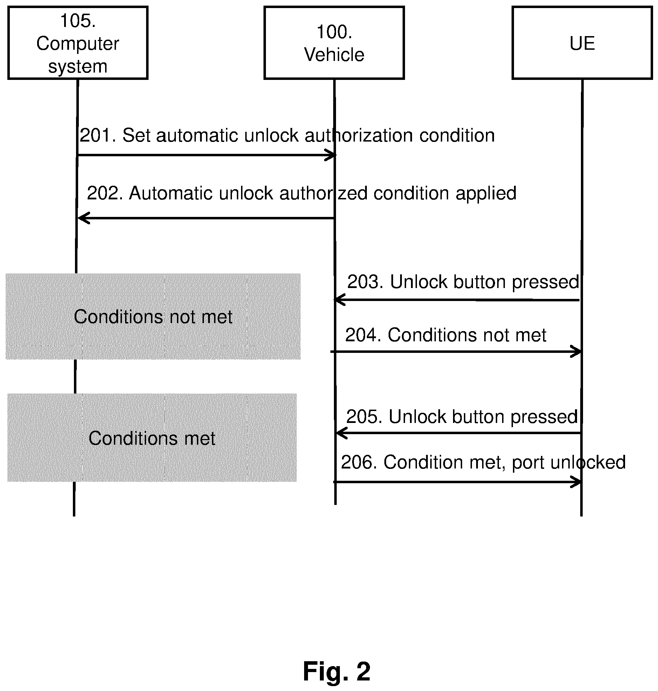

**FIG. 2** is an exemplary signaling diagram illustrating a method according to an example. The method comprises at least one of the following steps, which steps may be performed in any suitable order than described below. At start of the method, the charge cord **110** is connected to the charge inlet **108,** and the charge inlet **108** is locked, i.e. it is in a locked state, such that the charge cord **110** cannot be removed from the charge inlet **108.**

Step **201:** The fleet manager system may set an automatic unlock authorization condition to the vehicle **100.** There may be a fleet manager, e.g. a user, a driver, an operator or any other suitable person that sets the condition via the fleet manager system, for example by inputting information indicating the condition into the fleet manager system. Setting of the automatic unlock authorization condition may comprise sending information to the vehicle **100,** and the information indicates that the vehicle **100** should apply automatic unlock authorization condition. Consequently, the vehicle **100** applies the automatic unlock authorization condition.

Step **202:** When the vehicle **100** has applied the automatic unlock authorization condition, it may send a confirmation to the fleet manager system. The confirmation is a confirmation of that the vehicle **100** has applied the automatic unlock authorization condition.

Step **203:** The user, e.g. the driver of the vehicle **100,** an operator of the vehicle **100** or any other suitable person, activates an unlock button or a stop button on the vehicle **100.** The unlock button is a button for unlocking the charge inlet **108,** and the stop button may be a button for stopping an ongoing charging of the vehicle **100.** Activating the unlock button may comprise pressing a button, to activate the button via voice instructions, by using a wireless activation device, a key fob, just to mention some examples. Step 203 may be described as providing a request to the vehicle **100** unlock the charge inlet **108.** The request may comprise information about, for example the vehicle's current position, current SOC, current time, current charging status, current range etc.

Step **204:** When the vehicle **100** has received the request to unlock the charge inlet **108,** the vehicle **100** checks if a target condition is met. The target condition may be for example a target position. When the target condition is met, the current position of the vehicle **100** may be at least substantially the same as the target position of the vehicle 100, or the current position may be the same as the target position. Substantially the same may comprise that the current position is the same as the target position with some tolerance. In another example, the target condition may be for example a target SOC, target time, target charging status, target range, or a combination of any of the target conditions. The target condition is not met for the request send in step **203,** and the vehicle **100** sends information indicating that the condition is not met to for example a UE which is arranged to be accessible by a user, e.g. a driver of the vehicle **100,** and operator of the vehicle **100,** just to mention some examples. At step 205, it is not possible to unlock the charge inlet **108** using automatic authorization.

Step **205:** The user waits a bit and tries again. The user, e.g. the driver of the vehicle **100,** an operator of the vehicle **100** or any other suitable person, activates the unlock button or a stop button on the vehicle **100.** The unlock button is a button for unlocking the charge inlet **108,** the stop button may be a button for stopping an ongoing charging of the vehicle **100.** Activating the unlock button or the stop button may comprise pressing a button, to activate the button via voice instructions, by using a wireless activation device, a key fob, just to mention some examples. Step **203** may be described as providing a request to the vehicle **100** unlock the charge inlet **108.** The request may comprise information about for example the vehicle's current position, current SOC, current time, current charging status, current remaining range etc. Step **205** may be the second or more times that the request to unlock the charge inlet **108** is provided to the vehicle **100,** or it may be the first time that request to unlock the charge inlet **108** is provided to the vehicle **100.** It may not be necessary that steps 203 and 204 are performed before step 205 is performed.

Step **206:** When the vehicle **100** has received the request to unlock the charge inlet **108** in step 205, the vehicle **100** checks if the target condition is met. The target condition may be for example a target position. When the target condition is met, the current position of the vehicle **100** may be at least substantially the same as the target position of the vehicle 100, or the current position may be the same as the target position. Substantially the same may comprise that the current position is the same as the target position with some tolerance. In another example, the target condition may be for example a target SOC, target time, target charging status, target remaining range or a combination of any of the target conditions. The target condition met for the request send in step **205,** and the vehicle **100** sends information indicating that the condition is met to for example a UE which is arranged to be accessible by a user, e.g. a driver of the vehicle **100,** and operator of the vehicle **100,** just to mention some examples. The target position is met, the charge inlet unlock is authorized and the charge inlet **108** is unlocked. Consequently, the charge inlet **108** is unlocked and the charge cord **110** may be removed from the charge inlet **108.**

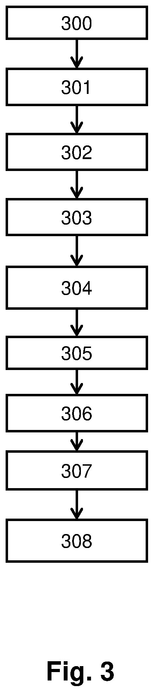

**FIG. 3** is an exemplary flow chart illustrating a method according to an example. The method is a computer-implemented method for handling a request to unlock a charge inlet **108** of a vehicle **100.** The vehicle **100** may be at least partly electrically driven or at least partly fuel cell driven. The method may be performed by a processing circuitry **402** of a computer system **105, 400,** and the computer system **105, 400** may be comprised in the vehicle **100.** The method comprises at least one of the following steps, which steps may be performed in any suitable order than described below:

Step **300:** This step corresponds to step **201** in **FIG.2****.** The processing circuitry **402** may obtain information indicating the target condition. Information indicating the target condition and the current condition may be comprised in the request in step **301,** it may be obtained from the vehicle **100,** it may be obtained from another computer system, cloud memory, another vehicle, a UE, via user input, just to mention some examples. Instead of obtaining the information indicating the target condition from someone else, the processing circuitry **402** may determine the target condition itself.

Step **301:** This step corresponds to steps **203** and **205** in **FIG. 2****.** The processing circuitry **402** of a computer system **105, 400** obtains a request to unlock the charge inlet **108.** The request to unlock the charge inlet **108** may be obtained from a charging stop button of the vehicle **100** or from an unlock button of the vehicle **100.** The request may be associated with an activation of the charging stop button or the unlock button.

Step **302:** This step corresponds to steps **204** and **205** in **FIG. 2****.** When the request has been received, the processing circuitry **402** compares the current condition of the vehicle **100** with a target condition of the vehicle **100.** The current condition comprises a current position of the vehicle **100** and the target condition comprises a target position of the vehicle **100.** The target position may be a target geographical position and the current position may be a current geographical position. The current condition may further comprise a current SOC of the vehicle **100** and the target condition further comprises a target SOC of the vehicle **100,** and/or the current condition may further comprise a current time and the target condition may further comprise a target time, and/or the current condition may further comprise a current charging status and the target condition may further comprise a target charging status, and/or the current condition may further comprise a current remaining range and the target condition may further comprise a target remaining range. The current condition and the target condition may be any combination of the above.

Step **303:** This step corresponds to step **204** in **FIG. 2****.** The processing circuitry **402** may determine to deny the request to unlock the charge inlet **108** when a result of the comparing indicates that the target condition is not met. The target condition is not met when target condition is not the same as the current condition, or that the difference between the target condition and the current condition is larger than a threshold.

Step **304:** This step corresponds to step **206** in **FIG. 2****.** The processing circuitry **402** determines to grant the request to unlock the charge inlet **108** when the result of the comparing indicates that the target condition is met. The target condition is met when the Target condition is the same as the current condition, or when the target condition is substantially the same as the current condition. Substantially the same may comprise that the target condition is the same as the current condition, with some tolerance, i.e. that there is a difference between the target condition and the current condition, and where the difference is at or below a threshold.

Step **305:** This step corresponds to step **206** in **FIG. 2****.** The processing circuitry **402** triggers unlocking of the charge inlet **108** when the request has been granted. Triggering unlocking may comprise sending instructions to an actuator which actuates the unlocking of the charge inlet **108.** The actuator is comprised in the vehicle **100,** for example in the charge inlet **108.**

Step **306:** This step corresponds to step **206** in **FIG. 2****.** The processing circuitry **402** may provide a confirmation of the unlocked charge inlet **108** to a UE.

Step **307:** This step corresponds to step **204** in **FIG. 2****.** The processing circuitry **402** may provide information indicating the denial of the request to a UE.

Step **308:** This step corresponds to step **201** in **FIG. 2****.** The processing circuitry **402** may provide an acknowledgement of that the information indicating the target condition has been obtained. The acknowledgement may be a confirmation.

A computer program product comprises program code for performing, when executed by the processing circuitry **402,** the method described herein.

A non-transitory computer-readable storage medium comprises instructions, which when executed by the processing circuitry **402,** cause the processing circuitry **402** to perform the method described herein.

The present disclosure relates to a computer system **105, 400** for handling a request to unlock a charge inlet **108** of a vehicle **100.** The vehicle **100** may be at least partly electrically driven or at least partly fuel cell driven. The computer system **105, 400** comprises processing circuitry **402** configured to perform the method described herein. The computer system **105, 400** comprises processing circuitry **402** configured to:
- obtain a request to unlock the charge inlet **108;**
- when the request has been received, compare a current condition of the vehicle **100** with a target condition of the vehicle **100,** wherein the current condition comprises a current position of the vehicle **100** and the target condition comprises a target position of the vehicle **100;**
- determine to grant the request to unlock the charge inlet **108** when a result of the comparing indicates that the target condition is met; and to
- trigger unlocking of the charge inlet **108** when the request has been granted.

The current condition may further comprise a current SOC of the vehicle **100** and the target condition may further comprise a target SOC of the vehicle **100,**
and/or the current condition may further comprise a current time and the target condition may further comprise a target time, and/or the current condition may further comprise a current charging status and the target condition may further comprise a target charging status, and/or the current condition may further comprise a current remaining range and the target condition may further comprise a target remaining range. The current condition and the target condition may be any combination of the above.

The request to unlock the charge inlet **108** may be obtained from a charging stop button of the vehicle **100.**

The processing circuitry **402** may be further configured to determine to deny the request to unlock the charge inlet **108** when a result of the comparing indicates that the target condition is not met.

The processing circuitry **402** may be further configured to provide a confirmation of the unlocked charge inlet **108** to a UE.

The processing circuitry **402** may be further configured to provide information indicating the denial of the request to a UE.

The processing circuitry **402** may be further configured to obtain information indicating the target condition.

The processing circuitry **402** may be further configured to provide an acknowledgement of that the information indicating the target condition has been obtained.

The vehicle **100** comprises the computer system 10**5, 400** described herein and a charge inlet **108.**

**FIG. 4** is a schematic diagram of a computer system **400** for implementing examples disclosed herein. The computer system **400** is adapted to execute instructions from a computer-readable medium to perform these and/or any of the functions or processing described herein. The computer system **400** may be connected (e.g., networked) to other machines in a LAN, an intranet, an extranet, or the Internet. While only a single device is illustrated, the computer system **400** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **400** may comprise at least one computing device or electronic device capable of including firmware, hardware, and/or executing software instructions to implement the functionality described herein. The computer system **400** may include processing circuitry **402** (e.g., processing circuitry including one or more processor devices or control units), a memory **404,** and a system bus **406.** The computer system **400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus (with or without a memory controller), a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** (e.g., via a circuit or any other wired, wireless, or network connection) and may include computer code for executing one or more processes described herein. The memory **404** may include non-volatile memory **408** (e.g., read-only memory (ROM), erasable programmable read-only memory (EPROM), electrically erasable programmable read-only memory (EEPROM), etc.), and volatile memory **410** (e.g., random-access memory (RAM)), or any other medium which can be used to carry or store desired program code in the form of machine-executable instructions or data structures and which can be accessed by a computer or other machine with processing circuitry **402.** A basic input/output system (BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program **420** stored on a transitory or non-transitory computer-usable or computer-readable storage medium (e.g., single medium or multiple media), such as the storage device **414,** which includes complex programming instructions (e.g., complex computer-readable program code) to cause the processing circuitry **402** to carry out actions described herein. Thus, the computer-readable program code of the computer program **420** can comprise software instructions for implementing the functionality of the examples described herein when executed by the processing circuitry **402.** In some examples, the storage device **414** may be a computer program product (e.g., readable storage medium) storing the computer program **420** thereon, where at least a portion of a computer program **420** may be loadable (e.g., into a processor) for implementing the functionality of the examples described herein when executed by the processing circuitry **402.** The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers (IEEE) 1394 serial port, a Universal Serial Bus (USB) port, an IR interface, and the like. The computer system **400** may include an output device interface **424** configured to forward output, such as to a display, a video display unit (e.g., a liquid crystal display (LCD) or a cathode ray tube (CRT)). The computer system **400** may include a communications interface **426** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system **105, 400** for handling a request to unlock a charge inlet **108** of a vehicle **100,** wherein the computer system **105, 400** comprises processing circuitry **402** configured to:
- obtain a request to unlock the charge inlet **108;**
- when the request has been received, compare a current condition of the vehicle **100** with a target condition of the vehicle **100,** wherein the current condition comprises a current position of the vehicle **100** and the target condition comprises a target position of the vehicle **100;**
- determine to grant the request to unlock the charge inlet **108** when a result of the comparing indicates that the target condition is met; and to
- trigger unlocking of the charge inlet **108** when the request has been granted.

Example 2: The computer system **105, 400** of example 1, wherein the current condition further comprises a current SOC of the vehicle **100** and the target condition further comprises a target SOC of the vehicle **100,** and/or wherein the current condition further comprises a current time and the target condition further comprises a target time; and/or wherein the current condition further comprises a current charging status and the target condition further comprises a target charging status; and/or wherein the current condition further comprises a current remaining range and the target condition further comprises a target remaining range.

Example 3: The computer system **105, 400** of example 1, wherein the processing circuitry **402** is further configured to determine to deny the request to unlock the charge inlet **108** when a result of the comparing indicates that the target condition is not met.

Example 4: The computer system **105, 400** of any one of examples 1-3, wherein the processing circuitry **402** is further configured to provide a confirmation of the unlocked charge inlet **108** to a UE.

Example 5: The computer system **105, 400** of any one of examples 1-4, wherein the processing circuitry **402** is further configured to provide information indicating the denial of the request to a UE.

Example 6: The computer system **105, 400** of any of examples 1-5, wherein the request to unlock the charge inlet **108** is obtained from a charging stop button of the vehicle **100.**

Example 7: The computer system **105, 400** of any of examples 1-6. wherein the processing circuitry **402** is further configured to obtain information indicating the target condition.

Example 8: The computer system **105, 400** of example 7, wherein the processing circuitry **402** is further configured to provide an acknowledgement of that the information indicating the target condition has been obtained.

Example 9: The computer system **105, 400** of any of examples 1-8, wherein the vehicle **100** is at least partly electrically driven or at least partly fuel cell driven.

Example 10: A vehicle **100** comprising a computer system **105, 400** of any of examples 1-9 and a charge inlet **108.**

Example 11: A computer-implemented method for handling a request to unlock a charge inlet **108** of a vehicle **100,** wherein the method comprises:
- obtaining **203, 205, 301,** by a processing circuitry **402** of a computer system **105, 400,** a request to unlock the charge inlet **108;**
- when the request has been received, comparing **204, 205, 302,** by the processing circuitry **402,** a current condition of the vehicle **100** with a target condition of the vehicle **100,** wherein the current condition comprises a current position of the vehicle **100** and the target condition comprises a target position of the vehicle **100;**
- determining **206, 304,** by the processing circuitry **402,** to grant the request to unlock the charge inlet **108** when the result of the comparing indicates that the target condition is met; and
- triggering **206, 305,** by the processing circuitry **402,** unlocking of the charge inlet **108** when the request has been granted.

Example 12: The method of example 11, wherein the current condition further comprises a current SOC of the vehicle **100** and the target condition further comprises a target SOC of the vehicle **100** and/or wherein the current condition further comprises a current time and the target condition further comprises a target time; and/or wherein the current condition further comprises a current charging status and the target condition further comprises a target charging status; and/or wherein the current condition further comprises a current remaining range and the target condition further comprises a target remaining range.

Example 13: The method of example 11, further comprising:
- determining **204, 303,** by the processing circuitry **402,** to deny the request to unlock the charge inlet **108** when a result of the comparing indicates that the target condition is not met.

Example 14: The method of any one of examples 11-13, further comprising:
- providing **206, 306,** by the processing circuitry **402,** a confirmation of the unlocked charge inlet 108 to a UE.

Example 15: The method of any one of examples 11-14, further comprising:
- providing **204, 307** information indicating the denial of the request to a user interface.

Example 16: The method of any of examples 11-15, wherein the request to unlock the charge inlet **108** is obtained from a charging stop button of the vehicle **100.**

Example 17: The method of any of examples 11-16, further comprising:
- obtaining **201, 300,** by the processing circuitry **402,** information indicating the target condition.

Example 18: The method of example 17, further comprising:
- providing **201, 308,** by the processing circuitry **402,** an acknowledgement of that the information indicating the target condition has been obtained.

Example 19: A computer program product comprising program code for performing, when executed by a processing circuitry **402,** the method of any of examples 11-18.

Example 20: A non-transitory computer-readable storage medium comprising instructions, which when executed by a processing circuitry **402,** cause the processing circuitry **402** to perform the method of any of examples 11-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (105, 400) for handling a request to unlock a charge inlet (108) of a vehicle (100), wherein the computer system (105, 400) comprises processing circuitry (402) configured to:
obtain a request to unlock the charge inlet (108);
when the request has been received, compare a current condition of the vehicle (100) with a target condition of the vehicle (100), wherein the current condition comprises a current position of the vehicle (100) and the target condition comprises a target position of the vehicle (100);
determine to grant the request to unlock the charge inlet (108) when a result of the comparing indicates that the target condition is met; and to
trigger unlocking of the charge inlet (108) when the request has been granted.

2. The computer system (105, 400) of claim 1, wherein the current condition further comprises a current State of Charge, SOC, of the vehicle (100) and the target condition further comprises a target SOC of the vehicle (100); and/or
wherein the current condition further comprises a current time and the target condition further comprises a target time; and/or
wherein the current condition further comprises a current charging status and the target condition further comprises a target charging status; and/or
wherein the current condition further comprises a current remaining range and the target condition further comprises a target remaining range.

3. The computer system (105, 400) of claim 1, wherein the processing circuitry (402) is further configured to:
determine to deny the request to unlock the charge inlet (108) when a result of the comparing indicates that the target condition is not met.

4. The computer system (105, 400) of any one of claims 1-3, wherein the processing circuitry (402) is further configured to:
provide a confirmation of the unlocked charge inlet (108) to a User Equipment, UE.

5. The computer system (105, 400) of any one of claims 1-4, wherein the processing circuitry (402) is further configured to:
provide information indicating the denial of the request to a User Equipment, UE.

6. The computer system (105, 400) of any of claims 1-5, wherein the request to unlock the charge inlet (108) is obtained from a charging stop button of the vehicle (100).

7. The computer system (105, 400) of any of claims 1-6. wherein the processing circuitry (402) is further configured to:
obtain information indicating the target condition.

8. The computer system (105, 400) of claim 7, wherein the processing circuitry (402) is further configured to:
provide an acknowledgement of that the information indicating the target condition has been obtained.

9. The computer system (105, 400) of any of claims 1-8, wherein the vehicle (100) is at least partly electrically driven or at least partly fuel cell driven.

10. A vehicle (100) comprising a computer system (105, 400) of any of claims 1-9 and a charge inlet (108).

11. A computer-implemented method for handling a request to unlock a charge inlet (108) of a vehicle (100), wherein the method comprises:
*obtaining* (203, 205, 301), by a processing circuitry (402) of a computer system (105, 400), a request to unlock the charge inlet (108);
when the request has been received, *comparing* (204, 205, 302), by the processing circuitry (402), a current condition of the vehicle (100) with a target condition of the vehicle (100), wherein the current condition comprises a current position of the vehicle (100) and the target condition comprises a target position of the vehicle (100);
*determining* (206, 304), by the processing circuitry (402), to grant the request to unlock the charge inlet (108) when the result of the comparing indicates that the target condition is met; and
*triggering* (206, 305), by the processing circuitry (402), unlocking of the charge inlet (108) when the request has been granted.

12. The method of claim 11, wherein the current condition further comprises a current State of Charge, SOC, of the vehicle (100) and the target condition further comprises a target SOC of the vehicle (100); and/or
wherein the current condition further comprises a current time and the target condition further comprises a target time; and/or
wherein the current condition further comprises a current charging status and the target condition further comprises a target charging status; and/or
wherein the current condition further comprises a current remaining range and the target condition further comprises a target remaining range.

13. The method of claim 11, further comprising:
*determining* (204, 303), by the processing circuitry (402), to deny the request to unlock the charge inlet (108) when a result of the comparing indicates that the target condition is not met.

14. A computer program product comprising program code for performing, when executed by a processing circuitry (402), the method of any of claims 11-13.

15. A non-transitory computer-readable storage medium comprising instructions, which when executed by a processing circuitry (402), cause the processing circuitry (402) to perform the method of any of claims 11-13.
